# EUROPÄISCHE PATENTSCHRIFT

(11) **EP 1 288 123 B1**
(45) Veröffentlichungstag und Bekanntmachung des Hinweises auf die Patenterteilung: **30.03.2005**
(21) Anmeldenummer: 02019623.4
(22) Anmeldetag: 03.09.2002
(51) Int. Cl.: B64C 1/12, B64D 11/00, B60R 13/02

(54) **Verkleidungselement für den Innenraum eines Fahrzeuges, insbesondere eines Luftfahrzeuges**
Covering element for the interior of a vehicle, especially the interior of an aircraft
Revêtement de l'intérieur d'un véhicule, notamment d'un aéronef

(30) Priorität: 03.09.2001 DE 10143011
(43) Veröffentlichungstag der Anmeldung: 05.03.2003
(73) Patentinhaber: Goodrich Hella Aerospace Lighting Systems GmbH, 59557 Lippstadt (DE)
(72) Erfinder: Harasta, Stefan, 33106 Paderborn (DE)
(74) Vertreter: Hilleringmann, Jochen, Dipl.-Ing.

(56) Entgegenhaltungen:
- FR-A- 2 686 301
- US-A- 1 856 115
- US-A- 3 649 069
- US-A- 4 911 219
- US-A- 5 117 889

## Beschreibung

Die Erfindung betrifft ein Verkleidungselement für den Innenraum eines Fahrzeuges, bei dem es sich insbesondere um ein Luftfahrzeug und vorzugsweise um ein Flugzeug handelt.

In Flugzeugen und Reisebussen erstrecken sich oberhalb der Sitzreihen Versorgungskanäle für Frischluft, in denen auch diverse Funktionseinheiten, wie beispielsweise Leseleuchten, Bedienelemente zur Anforderung von Bordpersonal oder Sauerstoffmasken sowie Sauerstoffquellen untergebracht sind. Diese Versorgungskanäle sind zum Innenraum des Fahrzeuges durch Verkleidungselemente abgedeckt. Dabei tritt immer wieder der Fall auf, dass Verkleidungselemente unterschiedlicher Breite eingesetzt werden müssen.

Darüber hinaus gilt bei Flugzeugen, dass der Versorgungskanal am vorderen bzw. hinteren Ende der Kabine aufgrund sich verjüngender Flugzeugrumpfabschnitte in einem Knick bzw. Bogen verläuft. Im Bereich der Biegung werden dann speziell angepasste Verkleidungselemente eingesetzt. Von der Industrie werden hierfür Verkleidungselementsätze angeboten, von denen je nach Einbausituation einzelne Verkleidungselemente eingesetzt werden können, während die restlichen Elemente des Satzes Abfall sind.

Als Sonnenschutz für Fahrzeugscheiben sind z.B. aus US-A-3,649,069 und US-A-5,117,889 Abschirmungen bekannt, die wie ein Fächer aufspannbar sind und mehrere gegeneinander verschwenkbare Abschirmplatten aufweisen. Ferner ist aus FR-A-2,686,301 eine Gepäck-Abstellfläche für Fahrzeuge mit aus der Abstellfläche ausziehbaren Platten bekannt.

Eine Aufgabe der Erfindung ist es, ein Verkleidungselement zu schaffen, das sich bequem und problemlos an die jeweilige Einbausituation anpassen lässt.

Zur Lösung dieser Aufgabe wird mit der Erfindung ein Verkleidungselement für den Innenraum eines Fahrzeuges, insbesondere eines Luftfahrzeugs, mit den Merkmalen des Patentanspruchs 1 vorgeschlagen; in den Unteransprüchen sind die Merkmale verschiedener Ausgestaltungen der Erfindung angegeben.

Das erfindungsgemäße Verkleidungselement umfasst mindestens zwei Verkleidungsteile, wobei eines von zwei benachbarten Verkleidungsteilen an dem jeweils anderen bewegbar gelagert ist. So ist beispielsweise das zweite Verkleidungsteil bewegbar an dem ersten gelagert und geführt. Beide Verkleidungsteile weisen eine Verkleidungswand auf, die eine Vorderseite und eine Rückseite aufweist. Die Vorderseite ist im Einbauzustand dem Innenraum des Fahrzeuges zugewandt. Jedes Verkleidungsteil hat eine Breitenerstreckung (Abmessung quer zur Fahrtrichtung des Fahrzeuges oder - allgemeiner - quer zur Aufeinanderfolge nebeneinander angeordneter Verkleidungselemente) und eine Längenerstreckung (Abmessung in Fahrtrichtung oder - allgemeiner - entlang der Aufeinanderfolge nebeneinander angeordneter Verkleidungselemente). Die Verkleidungswände der beiden Verkleidungsteile sind einander überlappend angeordnet. Dies gilt im wesentlichen in sämtlichen Relativbewegungspositionen beider Verkleidungsteile.

Jeweils zwei benachbarte Verkleidungsteile des erfindungsgemäßen Verkleidungselements können erfindungsgemäß zumindest eine von zwei Relativbewegungen ausführen. Hierbei handelt es sich zum einen um eine Lateralbewegung in Längenerstreckung beider Verkleidungsteile, wodurch die Längenabmessung des Verkleidungselements veränderbar ist. Bei der zweiten möglichen Relativbewegung beider Verkleidungsteile handelt es sich um eine Schwenkbewegung, bei der beide Verkleidungsteile um eine senkrecht zur Längen- und Breitenerstreckung der Verkleidungsteile verlaufende Schwenkachse verschwenkt werden können.

Ein erfindungsgemäßes Verkleidungselement mit der Möglichkeit der relativen Lateralbewegung jeweils zweier Verkleidungsteile macht es möglich, ein Verkleidungselement entsprechend der (in Fahrtrichtung betrachtet) Länge des abzudeckenden Bereichs zu schaffen. Das Verkleidungselement ist dabei also nach Art eines Teleskopes teleskopierbar. Eine Schwenkbewegung jeweils zweier Verkleidungsteile des erfindungsgemäßen Verkleidungselements macht es möglich, ein solches Verkleidungselement im Knick- bzw. Krümmungsbereich eines zu verkleidenden Kanals o.dgl. Komponente im Innenraum eines Fahrzeuges zu verwenden.

Mit dem erfindungsgemäßen Verkleidungselement ist es also möglich, die Verkleidungsteile je nach Einbausituation relativ zueinander auszurichten. Mit einer einzigen Einheit, nämlich dem erfindungsgemäßen Verkleidungselement, wird dann die Verkleidung der Fahrzeugkomponente vorgenommen. Sätze von einzelnen Verkleidungsteilen sind also nicht mehr erforderlich.

Bei Betrachtung der Vorderseite des Verkleidungselements ist lediglich eine Sichtkante zu erkennen, nämlich dort, wo sich der Übergang der einen Verkleidungswand zur anderen befindet, was insgesamt den Eindruck eines einteiligen und sauber verarbeiteten sowie montierten Verkleidungselements vermittelt.

Wie bereits oben dargelegt, kann das erfindungsgemäße Verkleidungselement mehr als zwei Verkleidungsteile aufweisen, wobei es zweckmäßig ist, wenn jeweils zwei benachbarte Verkleidungsteile aneinander relativ zueinander bewegbar (das heißt verschiebbar und/oder schwenkbar) gelagert sind. Die Erfindung ist vorstehend sowie nachfolgend lediglich der Einfachheit halber anhand eines Verkleidungselements beschrieben, das zwei Verkleidungsteile aufweist.

Bei der Montage des erfindungsgemäßen Verkleidungselements ist vorgesehen, dass die relativ zueinander bewegbaren Verkleidungsteile zunächst dem zu verkleidenden Einbauraum entsprechend ausgerichtet werden. Damit diese einmal eingestellte Relativstellung der Verkleidungsteile bei der weiteren Handhabung im Zusammenhang mit der Einbaumontage des Verkleidungsteils sowie danach beibehalten bleibt, verfügen die Verkleidungsteile des erfindungsgemäßen Verkleidungselements über zusammen wirkende Feststellelemente, die eine ungewollte Relativbewegung verhindern. Diese Feststeltelemente sind zweckmäßigerweise längenveränderbar und sollten dann, wenn die Verkleidungsteile Relativ-Schwenkbewegungen ausführen können, vorzugsweise auch biegbar sein. Ein derartiges Feststellelement kann grundsätzlich an jeder beliebigen Stelle eines Verkleidungsteils an diesem angreifen. Vorzugsweise ist das Feststellelement auf der Rückseite der Verkleidungsteile angeordnet, um im Einbauzustand des Verkleidungselements nicht sichtbar zu sein.

In vorteilhafter Weiterbildung der Erfindung lassen sich mittels des Feststellelementes zwei Verbindungselemente relativ zueinander feststellen, von denen jedes an einem unterschiedlichen Verkleidungsteil angeordnet ist. Die beiden Verbindungselemente bewegen sich bei Verstellung der Verkleidungsteile relativ zueinander und lassen sich durch das Feststellelement relativ zueinander feststellen. Jedes Verbindungselement ist vorteilhafterweise ebenfalls an der Rückseite des betreffenden Verkleidungsteils angeordnet.

Erfingdungsgemäß ist jedes Verbindungselement als von der Rückseite der Verkleidungswand des betreffenden Verkleidungsteils abstehender Steg ausgebildet ist, der in Längenerstreckung des Verkleidungsteils verläuft. Zwei derartige Stege benachbarter Verkleidungsteile liegen aneinander an, und zwar auch in der maximal Auszugsposition. Mit anderen Worten ragen sie über den Überlappungsbereich eines Verkleidungsteils hinüber, so dass beide Stege sich auch in der Maximal-Auszugsposition noch überlappen. In diesem Überlappungsbereich wird dann das Feststellelement kraftschlüssig mit den Stegen verbunden.

Zweckmäßig ist es, wenn die Stege an den einander gegenüber liegenden, die Längenerstreckung des Verkleidungselements bestimmenden Enden der beiden Verkleidungsteile beginnen und nach Art von in Breitenerstreckung biegbaren Zungen aufeinander zugerichtet verlaufen. An den einander kontaktierenden Zungen lässt sich dann ein Feststellelement vorzugsweise in Form einer Klammer kraftschlüssig verbinden. Diese Klammer weist zudem Verkrallungselemente zum Verkrallen mit den Stegen auf. Über das klammerförmige Feststellelement ist damit ein kraftschlüssiger Verbund beider Stege realisiert. Eine Alternative für die Ausbildung eines Feststellelements kann aber auch ein anderer Formschluss beider Stege sein. So ist es beispielsweise denkbar, dass die Stege über Zapfen/Loch-Paare verfügen, die in den unterschiedlichen Relativstellungen zweier benachbarter Verkleidungselemente miteinander verrasten.

Damit der Monteur direkt vor Ort die Feststellelemente vorliegen hat, ist es zweckmäßig, wenn diese Feststellelemente vom Lieferanten zusammen mit dem Verkleidungselement direkt geliefert werden. Beispielsweise können die Feststellelemente an dem Verkleidungselement gehalten sein, wozu dieses bzw. die Verkleidungsteile über entsprechende, dafür vorgesehene Halteaufnahmen verfügt/verfügen. Hat der Monteur dann die Voreinstellung der Verkleidungsteile vorgenommen, so entnimmt er das bzw. die Feststellelement/Feststellelemente und bringt sie an den Verkleidungsteilen bzw. deren Verbindungselementen direkt an.

Damit sich die Verkleidungsteile nach Vornahme der Voreinstellung nicht mehr ungewollt relativ zueinander bewegen können, ist es von Vorteil, wenn das Verkleidungselement über eine Vorverriegelungsvorrichtung verfügt. Diese Vorverriegelungsvorrichtung ist im einfachsten Falle an zwei aneinander liegenden, zuvor genannten Stegen ausgebildet, wobei diese beiden Stege derart miteinander zusammen wirken, dass sie sich, ohne dass ein Feststellelement Verwendung findet, erst bei Aufbringung einer Minimalkraft relativ zueinander bewegen lassen. Dieser kraftschlüssige Verbund ist beispielsweise als Reibschluss oder Formschluss ausgebildet. Ein Formschluss lässt sich mit Vorteil durch eine Rastverbindung realisieren, die mindestens eine Rastvertiefung an dem einen Steg und mindestens einen in die Rastvertiefung eintauchenden Rastvorsprung an dem anderen Steg aufweist. Vorteilhafterweise sind mehrere Rastvertiefungen bzw. Rastvorsprünge vorgesehen, die in Relativbewegungsrichtung der beiden Stege aufeinanderfolgend angeordnet sind. Auf diese Weise entstehen zahnstangenähnliche Strukturen an beiden Stegen, die ineinander greifen.

Die Vorverriegelungsvorrichtung kann aber auch alternativ an anderen speziell zu diesem Zweck vorgesehenen Elementen der Verkleidungsteile ausgebildet sein. So ist es beispielsweise möglich, dass das eine Verkleidungsteil einen von der Rückseite seiner Verkleidungswand um die Dicke der Verkleidungswand beabstandeten Steg bzw. zungenförmigen Vorsprung ausgebildet ist, wobei die Verkleidungswand des anderen Verkleidungsteils in den Zwischenraum zwischen diesem Steg bzw. Vorsprung und dem Verkleidungsteil eintaucht. Hierdurch entsteht ein kraftschlüssiger Sitz des einen Verkleidungsteils am anderen. Durch entsprechende Bemessung (beispielsweise Presspassung) wird die Vorverriegelungsvorrichtung mittels Reibschluss realisiert; alternativ dazu kann durch eine entsprechende Verzahnung am Steg bzw. Vorsprung sowie an der Rückseite des vom Steg umgriffenen Verkleidungsteils auch eine formschlüssige Verbindung realisiert werden.

Wird, wie oben gemäß der ersten alternativen Ausgestaltung der Vorverriegelungsvorrichtung angegeben, ein Stegpaar mit Rastvertiefungen und Rastvorsprüngen verwendet, so ist es von Vorteil, wenn diese Stege an ihren, dem jeweiligen anderen Verkleidungsteil zugewandten Enden, flexibel sind. Dadurch lassen sich die Stege in Breitenerstreckung der Verkleidungsteile verbiegen, was für die Realisierung einer Schwenkbewegung benachbarter Verkleidungsteile erforderlich ist.

Zweckmäßig ist es in dem zuvor beschriebenen Fall, wenn der eine Steg einen Umgreifabschnitt zum Umgreifen des anderen Steges aufweist. Dadurch liegen beide Stege stets dicht aneinander an, was von Vorteil ist für die kraftschlüssige Anlage beider Stege. Zwischen dem Umgreifabschnitt und dem einen Steg, von dem der Umgreifabschnitt absteht, entsteht somit eine Aufnahme, in die der andere Steg eingetaucht ist. Dieser andere Steg ist dann an zwei Seiten eingefasst (nämlich einerseits von dem anderen Steg und andererseits von dessen Umgreifabschnitt).

Die Rastvorsprünge bzw. Rastvertiefungen können sowohl an den einander zugewandten Seiten beider Stege, aber auch an der Innenseite des Umgreifabschnitts und der diesem zugewandten Außenseite des anderen Steges angeordnet sein.

Damit das erfindungsgemäße Verkleidungselement über eine maximale Auszugs- und/oder Schwenkbewegung zweier benachbarter Verkleidungsteile hinaus nicht bewegt werden kann, ist es von Vorteil, wenn die Verkleidungsteile über zusammen wirkende Anschlagflächen verfügen. Diese Anschlagflächen können grundsätzlich an jeder denkbaren Position der Verkleidungsteile angeordnet sein, die in den Maximal-Bewegungspositionen benachbart zueinander liegen. So ist es beispielsweise möglich, die Anschlagflächen an den Innenseiten der Ränder der Verkleidungswände anzuordnen. Vorteilhaft ist es jedoch, wenn die Anschlagflächen an den Stegen angeordnet sind und insbesondere an den Stegen der Vorverriegelungsvorrichtung. Eine Anschlagfläche an dem Ende des von dem Umgreifabschnitt umgriffenen Steges wirkt dann mit dem Umgreifabschnitt des anderen Steges zur Begrenzung der maximalen Auszug- bzw. Schwenkbewegungsposition zusammen.

In vorteilhafter Weiterbildung der Erfindung ist vorgesehen, dass das eine Verkleidungsteil mindestens zwei Umgreifvorsprünge aufweist, mit denen es das andere Verkleidungsteil umgreift. Diese Umgreifvorsprünge sind an den beiden die Breitenerstreckung des Verkleidungsteils definierenden Enden angeordnet. Die Umgreifvorsprünge erstrecken sich jeweils über eine relativ geringe Strecke in Längsrichtung der Verkleidungsteile, so dass für ein Verkleidungselement, dessen Verkleidungsteile zumindest auch verschwenkbar sein sollen, eine Möglichkeit für diese Bewegung besteht. Ist die Länge der Umgreifvorsprünge in Längenerstreckung des betreffenden Verkleidungsteils zu groß, so ist die Verschwenkbarkeit aufgrund der Linienführung (im Gegensatz zur zuvor beschriebenen punktuellen Führung) recht eingeschränkt.

In weiterer vorteilhafter Ausgestaltung der Erfindung ist vorgesehen, dass jedes Verkleidungsteil mit von seiner Verkleidungswand aufragenden Randabschnitten versehen ist, und zwar mit Ausnahme der einander überlappenden Bereiche der Verkleidungswände. In diesen Bereichen sind zweckmäßigerweise keine aufragenden Randabschnitte vorgesehen, da diese wegen der Überlappung stören würden. Im Falle zweier im wesentlichen rechteckige Verkleidungswände aufweisender Verkleidungsteile würden also diese an drei Kanten mit aufragenden Randabschnitten versehen sein. Bei einem Verkleidungselement mit mehr als zwei Verkleidungsteilen würden die mittleren Verkleidungsteile lediglich zwei aufragende Randabschnitte an ihren die Breitenerstreckung begrenzenden Rändern aufweisen.

Die Verkleidungselemente werden im Innenraum des Fahrzeuges an vorzugsweise speziell dafür vorgesehenen Haltestrukturen befestigt. Im Falle eines Flugzeugs sowie der Anbringung der Verkleidungselemente oberhalb der Sitzreihen handelt es sich bei diesen Haltestrukturen zumeist um Profilleisten, an denen Befestigungselemente befestigt werden können, die wiederum mit den Verkleidungselementen verbunden sind. Bei der erfindungsgemäßen Ausgestaltung des Verkleidungselements ist nun mit Vorteil vorgesehen, dass lediglich eines von zwei benachbarten Verkleidungsteilen über zumindest ein Befestigungselement verfügt. Das zweite Verkleidungselement, das über kein separates Befestigungselement verfügt, wird an dem anderen Verkleidungsteil gehalten. Weist das Verkleidungselement mehr als zwei, also beispielsweise drei Verkleidungsteile auf, so ist es durchaus möglich, dass die beiden außen liegenden Verkleidungsteile über jeweils mindestens ein Befestigungselement verfügen, während das mindestens eine dazwischen liegende Verkleidungsteil kein separates Befestigungselement aufweist.

Die Erfindung wird nachfolgend anhand eines Ausführungsbeispiels sowie unter Bezugnahme auf die Zeichnung näher erläutert. Dabei zeigen im einzelnen:
- Fig. 1: einen Teilquerschnitt durch den Rumpf eines Flugzeuges zur Verdeutlichung der Einbauposition eines erfindungsgemäßen Verkleidungselements,
- Fig. 2: eine Draufsicht auf die im Einbauzustand dem Innenraum des Flugzeuges abgewandten Rückseite des Verkleidungselements gemäß Pfeil II der Fig. 1, bei in ihrer Maximal-Auszugsposition befindlichen Verkleid ungsteilen,
- Fig. 3: eine Draufsicht auf die Vorderseite des Verkleidungselements gemäß Pfeil III der Fig. 1,
- Fig. 4: einen Längsschnitt gemäß der Linie IV - IV der Fig. 2,
- Fig. 5: eine vergrößerte Darstellung des Bereichs V der Fig. 4,
- Fig. 6: einen Längsschnitt entlang der Linie VI - VI der Fig. 2,
- Fig. 7: einen Schnitt entlang der Linie VII - VII der Fig. 2,
- Fig. 8: eine Ansicht auf das Verkleidungselement entsprechend dem Pfeil II der Fig. 2, jedoch bei relativ zueinander verschwenkten Verkleidungsteilen und
- Fig. 9: eine Ansicht entsprechend dem Pfeil III der Fig. 1 bei relativ zueinander verschwenkten Verkleidungsteilen des Verkleidungselements.

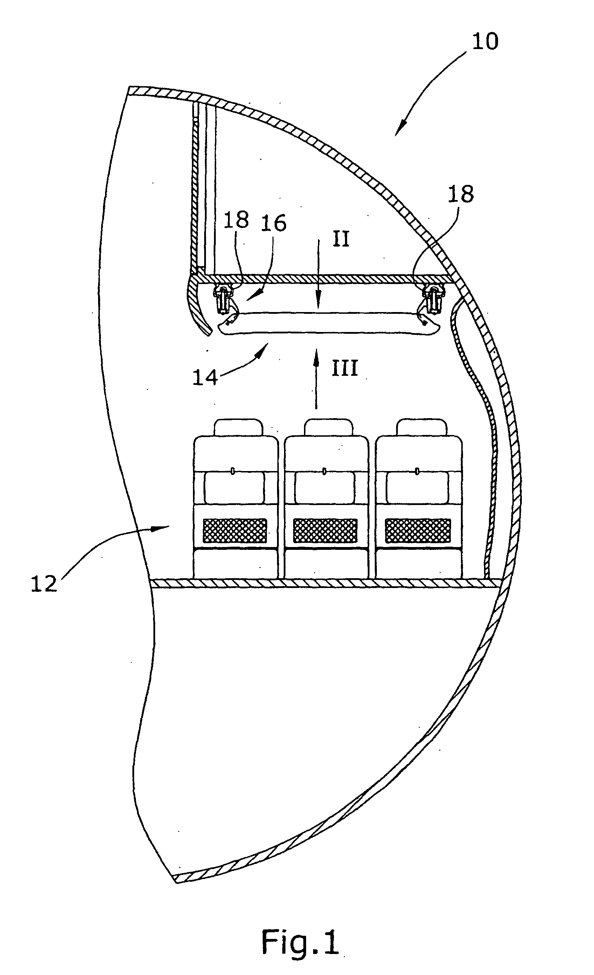

Fig. 1 zeigt stark vereinfacht einen Teilquerschnitt durch den Rumpf eines Flugzeuges 10, über dessen Sitzreihen 12 mehrere einen (nicht dargestellten) Versorgungskanal verkleidende Verkleidungselemente 14 angeordnet sind. Die Verkleidungselemente 14 sind mittels Befestigungselementen 16 an Halteleisten 18 des Flugszeugs 10 befestigt.

Die meisten der Verkleidungselemente 14 weisen festgelegte Längenerstreckungen auf, die durch ihre Einbauten (Leseleuchten, Luftdüsen, Sauerstoffmasken) definiert sind. Darüber hinaus existieren sogenannte In-Fill-Panel, die für einen dem Abstand der Sitzreihen entsprechenden Abstand der zuvor beschriebenen Verkleidungselemente 14 sorgen.

Darüber hinaus sind aber auch mitunter längenvariable Verkleidungselemente erforderlich oder aber Verkleidungselemente wünschenswert, die zur Verkleidung der Knick- bzw. Krümmungsbereiche der Versorgungskanäle eingesetzt werden können. Derartige Bereiche sind beispielsweise zum vorderen bzw. hinteren Ende des Flugzeugrumpfes anzutreffen, wo der zylindrische Teil des Rumpfes und die sich verjüngenden Endbereiche ineinander übergehen.

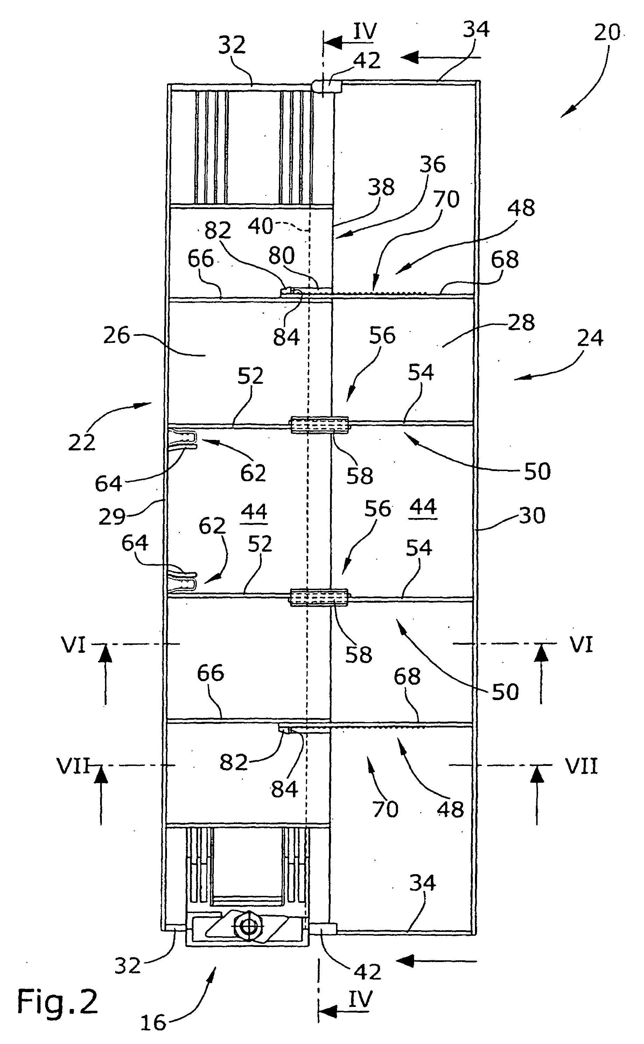

Ein Verkleidungselement 20, das sowohl längenanpassbar als auch im Knick- bzw. Übergangsbereich des Versorgungskanals einsetzbar ist, ist in den Fign. 2 bis 9 im einzelnen dargestellt. Das Verkleidungselement 20 umfasst mehrere relativ zueinander bewegbare Verkleidungsteile 22,24 (in diesem Ausführungsbeispiel ein erstes Verkleidungsteil und ein zweites Verkleidungsteil, es können aber auch drei oder vier sowie mehr Verkleidungsteile pro Verkleidungselement vorgesehen sein). Jedes Verkleidungsteil 22,24 weist eine Verkleidungswand 26,28 auf, die in diesem Ausführungsbeispiel im wesentlichen viereckig sind und an den Längsseiten sowie den Querseiten von aufragenden Längsränder 29, 30 bzw. Querrändem 32,34 begrenzt sind. Die beiden Verkleidungsteile 22,24 sind relativ zueinander verschiebbar bzw. schwenkbar, wobei sich ihre Verkleidungswände 26,28 in einem Überlappungsbereich 36 überlappen. Dieser Überlappungsbereich 36 ist durch die jeweilige Relativlage der dem jeweils anderen Verkleidungsteil 22,24 zugewandten Längskante 38,40 der beiden Verkleidungswände 28,26 definiert.

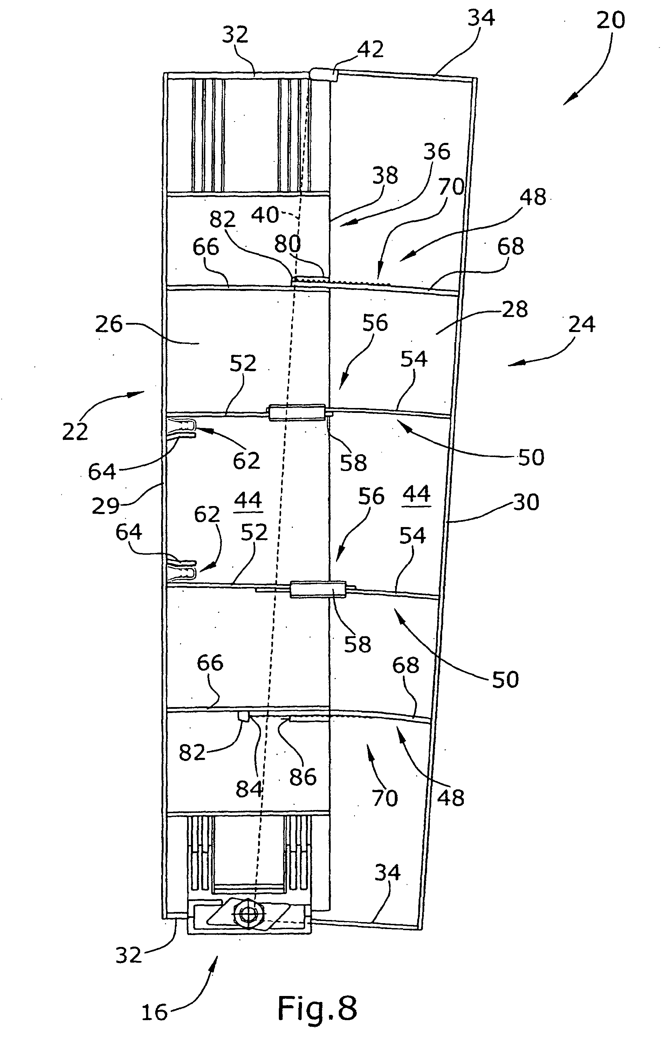

An seinen beiden die Breitenerstreckung des zweiten Verkleidungsteils 24 definierenden Querrändern 34 weist das zweite Verkleidungsteil 24 jeweils einen Umgreifvorsprung 42 auf, die beide die Querränder 32 des ersten Verkleidungsteils 22 umgreifen. Damit lässt sich sozusagen das erste Verkleidungsteil 22 in das zweite Verkleidungsteil 24 zur Anpassung der Gesamtlänge des Verkleidungselements 20 (Abstand zwischen den beiden Längsrändern 29 und 30 der beiden Verkleidungsteile 22,24) verschieben. Darüber hinaus weist das erste Verkleidungsteil nahe seiner beiden Querränder 32 jeweils ein Befestigungselement 16 auf, von denen zur Verdeutlichung in den Fign. 2 und 8 lediglich eines eingezeichnet ist.

In Fig. 2 sind die beiden Verkleidungsteile 22, 24 in ihrer Maximal-Auszugposition gezeigt, wobei die Rückseiten 44 der beiden Verkleidungsteile 22,24 des Verkleidungselements 20 gezeigt sind.

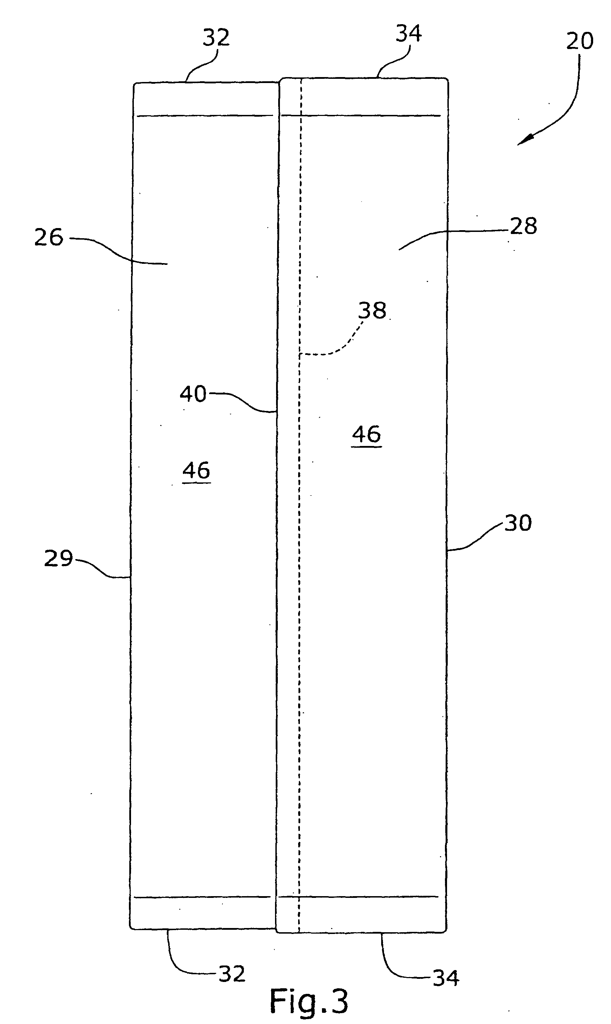

Fig. 3 zeigt die Ansicht des Verkleidungselements 20 gemäß Fig. 2 auf die Vorderseiten 46 der Verkleidungswände 26,28.

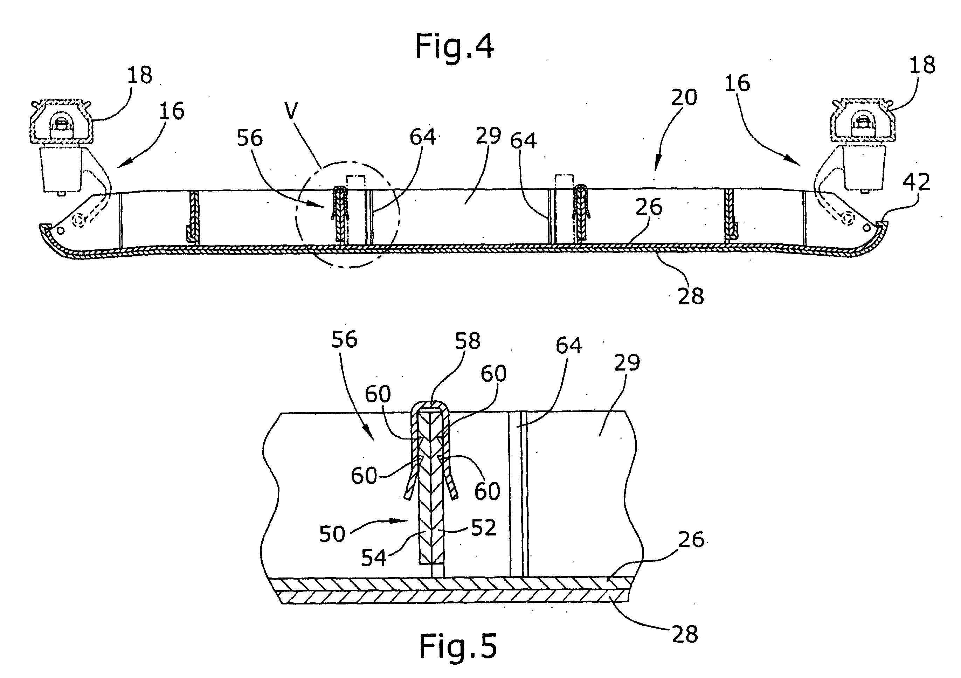

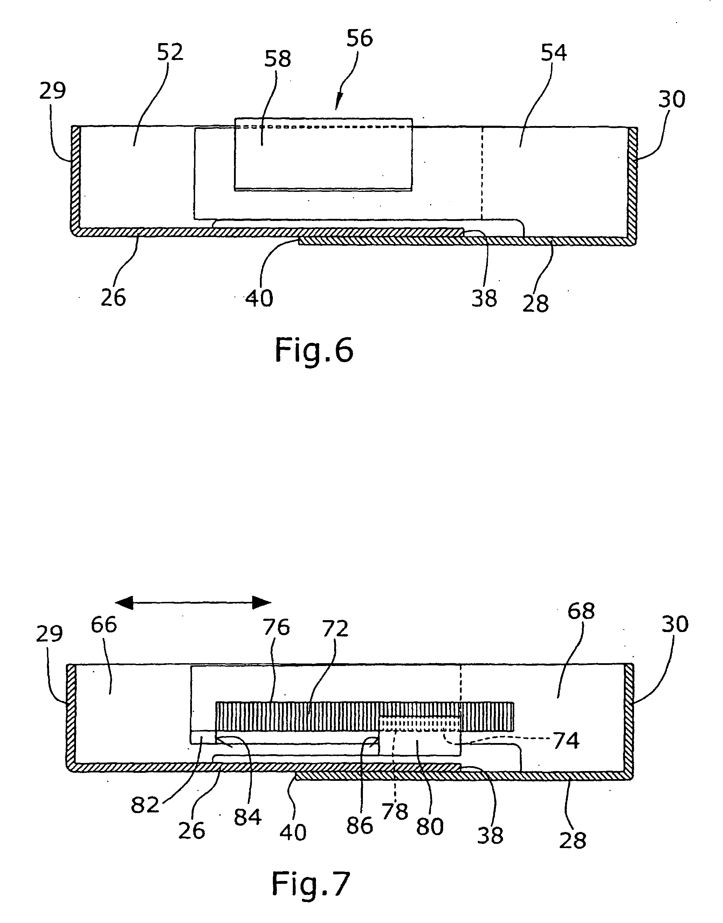

Wie insbesondere in den Fign. 2 und 8 zu erkennen ist, befinden sich an den Rückseiten 44 der Verkleidungswände 26,28 beider Verkleidungsteile 22,24 in diesem Ausführungsbeispiel vier Paare 48,50 von Stegen, und zwar in Breitenerstreckung des Verkleidungselements 20 betrachtet zwei außen liegende Stegpaare 48, zwischen denen zwei innen liegende Stegpaare 50 angeordnet sind. Die beiden innen liegenden Stegpaare 50 weisen jeweils zwei Stege 52,54 auf, die an unterschiedlichen Verkleidungsteilen 22,24 angeordnet sind und sich ausgehend von den Längsrändern 29,30 in Längenerstreckung der Verkleidungsteile 22,24 bis über die Längskanten 38 bzw. 40 der betreffenden Verkleidungswand 26,28 hinaus erstrecken. Die beiden Stege 52,54 jedes Stegpaares 50 liegen aneinander an und sind lediglich in ihrem dem jeweiligen Längsrand 29,30 benachbarten Bereich mit der betreffenden Verkleidungswand 26,28 verbunden (siehe Fig. 6). Auf die Stege 52,54 beider Stegpaare 50 ist jeweils ein Feststellelement 56 in Form einer Klammer 58 aufgesteckt, die, wie insbesondere anhand der Fign. 4 und 5 zu erkennen ist, im Querschnitt U-förmig ausgebildet ist und innen liegende Verkrallungselemente 60 in Form von widerhakenähnlichen Vorsprüngen aufweist, die in die Seiten der Stege 52,54 eindringen und sich dort verkrallen.

Über die Klammern 58 sind die beiden Stege 52,54 jedes Stegpaares 50 kraftschlüssig miteinander verbunden. Eine Verbindungsvorrichtung zum kraftschlüssigen Verbinden und Feststellen beider Verkleidungsteile 22,24 wird also durch je zwei Verbindungselemente in Form der Stege 52,54 und ein Feststellelement 56 in Form der Klammer 58 realisiert.

Die Klammern 58 werden dann, wenn sie nicht auf die Stegpaare 50 aufgesteckt sind, in Aufnahmen 62 des ersten Verkleidungsteils 22 untergebracht. Diese Aufnahmen 62 sind als Taschen ausgebildet, die einerseits von den Stegen 52 und andererseits von Vorsprüngen 64 gebildet sind, die von dem Längsrand 29 des ersten Verkleidungsteils 28 abstehen (siehe Fign. 2, 4 und 5).

Auch die bereits oben angesprochenen außen liegenden Stegpaare weisen jeweils zwei Stege 66,68 auf, die wie die Stege 52,54 mit den Verkleidungsteilen 22,24 verbunden sind. Im Unterschied zu den Stegen 52,54 weisen die Stege 66,68 jeweils eine Rastvorrichtung 70 auf, die verhindert, dass sich die beiden Verkleidungsteile 22,24 ungewollt verstellen können, so lange die Feststellklammern 58 noch nicht aufgesteckt sind. Jede Rastvorrichtung 70 ist dabei mit einer Vielzahl von Rastvertiefungen 72,74 und Rastvorsprüngen 76,78 an dem einen Steg 68 sowie an einem Umgreifabschnitt 80 des anderen Steges 66 versehen. Der Umgreifabschnitt 80 umgreift dabei den Steg 68 teilweise, wobei die Rastvertiefungen und Rasterhebungen einander gegenüber liegend angeordnet sind und ineinander greifen.

Die Rastvorrichtungen 70 sollen zunächst einmal verhindern, dass sich die beiden Verkleidungsteile 22,24, nachdem sie vom Monteur voreingestellt worden sind, ungewollt relativ zueinander bewegen können (verschieben oder verschwenken). Sollte dies aber dennoch geschehen, so wird diese Relativbewegung von einem akustisch hörbaren Signal begleitet, das entsteht, wenn die Rastvertiefungen und Rastvorsprünge gegeneinander verrutschen. Dies signalisiert dem Monteur eine Relativverschiebung bzw. Relativverschwenkung beider Verkleidungsteile. Bei der Verrastung der Stege 66,68 beider Stegpaare 48 handelt es sich also sozusagen um eine Vorverriegelungsvorrichtung zur Verriegelung beider Verkleidungsteile 22,24 in deren jeweiliger Verstellposition, so lange die Feststellklammern 58 noch nicht angebracht sind.

Zur Begrenzung der Maximal-Auszugposition sowie der Maximal-Verschwenkposition dienen in diesem Ausführungsbeispiel zwei Anschlagvorsprünge 82, die an den dem Längsrand 30 abgewandten freien Enden der Stege 68 der Stegpaare 48 angeordnet sind. Diese Anschlagvorsprünge 82 weisen Anschlagflächen 84 auf, die mit Gegenanschlagflächen 86 zusammen wirken, welche durch die Umgreifabschnitte 80 der Stege 66 gebildet sind (siehe Fign. 2 und 8 sowie insbesondere Fig. 7).

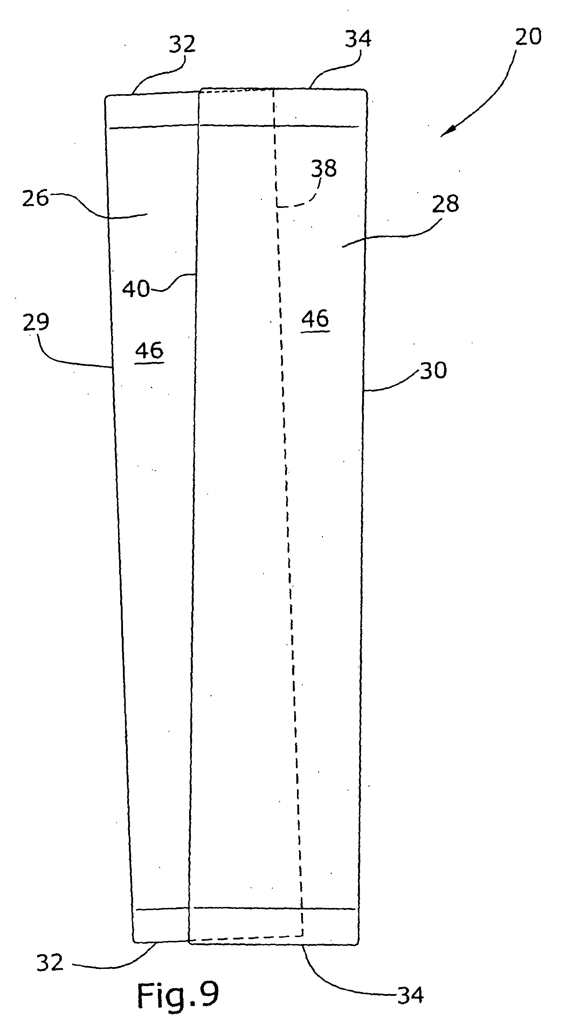

Wie bereits oben dargelegt, lässt sich das hier beschriebene Verkleidungselement 20 nicht nur linear ausziehen bzw. zusammen schieben, sondern auch verschwenken (siehe Fign. 8 und 9). Der punktförmige Kontakt, realisiert durch die Umgreifvorsprünge 42, ermöglicht dabei zusammen mit einem gewissen Spiel, mit dem beide Verkleidungsteile 22,24 ineinander gesteckt sind, diese Verschwenkung. Zusätzlich ist für die Verschwenkung auch eine flexible Ausgestaltung der Stege 52,54,66,68 erforderlich, was, wie oben beschrieben, gegeben ist. Die Verschwenkung beider Verkleidungsteile 22,24 erfolgt um eine senkrecht zu den Verkleidungswänden 26,28 verlaufenden Schwenkachse, die im Falle der Fign. 8 und 9 senkrecht auf der Zeichnungsebene steht.

Es sei an dieser Stelle hervorgehoben, dass das unter Bezugnahme auf die Zeichnung beschriebene Ausführungsbeispiel eines Verkleidungselements beide Relativbewegungsarten (Verschiebung und Verschwenkung) der beiden Verkleidungsteile 22,24 ermöglicht. Die Erfindung ist aber nicht notwendigerweise darauf beschränkt, dass beide Relativbewegungsarten an ein und demselben Verkleidungselement bzw. zwischen jeweils zwei benachbarten Verkleidungsteilen eines Verkleidungselements realisierbar ist. So ist es beispielsweise auch möglich, dass die beiden Verkleidungsteile eines Verkleidungselements sich entweder nur linear verschieben oder nur verschwenken lassen. Auch wenn ein Verkleidungselement mehr als zwei Verkleidungsteile aufweist, so ist es möglich, dass jeweils benachbarte Verkleidungsteile sich entweder nur verschieben oder nur verschwenken lassen. Man kann auch ein erfindungsgemäßes Verkleidungselement realisieren, das mehr als zwei Verkleidungsteile aufweist, von denen jeweils benachbarte lediglich eine Relativbewegung zueinander ausführen können. Mit anderen Worten ist die Erfindung weder auf eine bestimmte Anzahl von Verkleidungsteilen noch auf die Realisierung nur jeweils einer Relativbewegungsart beschränkt. Sämtliche Kombinationen von Relativbewegungsarten und Anzahl von Verkleidungsteilen sind möglich.

## Patentansprüche

1. Verkleidungselement für den Innenraum eines Fahrzeuges, insbesondere eines Luftfahrzeuges, mit
- mindestens einem ersten und einem zweiten Verkleidungsteil (22,24), von denen jedes eine Verkleidungswand (26,28) mit einer im Einbauzustand zum Innenraum des Fahrzeuges weisenden Vorderseite (46) und einer Rückseite (44) sowie mit einer Breitenerstreckung und einer dazu quer gerichteten Längenerstreckung aufweist,
- wobei die Verkleidungswände (26,28) der beiden Verkleidungsteile (22,24) einander überlappen,
- wobei das zweite Verkleidungsteil (24) im wesentlichen in Richtung seiner Längenerstreckung verschiebbar und/oder um eine im wesentlichen jeweils senkrecht zu seiner Längen- und seiner Breitenerstreckung verlaufenden Schwenkachse verschwenkbar an dem ersten Verkleidungsteil (22) gelagert ist,
- wobei an jedem Verkleidungsteil (22,24) mindestens ein Verbindungselement (52,54) angeordnet ist, sich die mindestens zwei Verbindungselemente (52,54) bei einer Relativbewegung beider Verkleidungsteile (22,24) ebenfalls relativ zueinander bewegen und die mindestens zwei Verbindungselemente (52,54) zur Verhinderung einer unbeabsichtigten Relativbewegung beider Verkleidungsteile (22,24), wenn diese eine beabsichtigte Relativstellung einnehmen, mittels eines Feststelletements (56) feststellbar sind und
- wobei jedes Verbindungselement (52,54) als von der Rückseite (44) der Verkleidungswand (26,28) des betreffenden Verkleidungsteils (22,24) abstehender, in Längenerstreckung des Verkleidungsteils (22,24) verlaufender Steg ausgebildet ist, die Stege jeweils zweier Verbindungselemente (52,54) der beiden Verkleidungsteile (22,24) aneinander liegen und das Feststellelement (56) die beiden Stege kraftschlüssig verbindet.

2. Verkleidungselement nach Anspruch 1, **dadurch gekennzeichnet, dass** das Feststellelement (56) eine Klammer (58) ist, die auf die beiden aneinanderliegenden Stege aufsteckbar ist und Verkrallungselemente (60) zum Verkrallen mit den Stegen aufweist.

3. Verkleidungselement nach Anspruch 1 oder 2, **dadurch gekennzeichnet, dass** die Stege der beiden Verkleidungsteile (22,24) an ihren dem jeweils anderen Verkleidungsteil (22,24) zugewandten Enden flexibel und in Richtung der Breitenerstreckung der Verkleidungsteile (22,24) biegbar sind.

4. Verkleidungselement nach einem der Ansprüche 1 bis 3, ferner **gekennzeichnet durch** eine Vorverriegelungsvorrichtung zur Vorverriegelung der Verkleidungsteile (22,24) in ihrer jeweiligen Relativbewegungsposition.

5. Verkleidungselement nach Anspruch 4, **dadurch gekennzeichnet, dass** die Vorverriegelungsvorrichtung mindestens zwei an unterschiedlichen Verkleidungsteilen angeordnete Vorverriegelungselemente (66,68) aufweist, die aneinander liegen und gegen unbeabsichtigte Relativbewegungen miteinander verbindbar sind.

6. Verkleidungselement nach Anspruch 4, **dadurch gekennzeichnet, dass** jedes Vorverriegelungselement (66,68) als von der Rückseite (44) der Verkleidungswand (26,28) des betreffenden Verkleidungsteils (22,24) abstehender, in Längserstreckung des Verkleidungsteils (22,24) verlaufender Steg ausgebildet ist und dass beide Stege aneinander liegen.

7. Verkleidungselement nach Anspruch 6, **dadurch gekennzeichnet, dass** die Stege jedes Paares von aneinander liegenden Vorverriegelungselementen (66,68) rastend miteinander verbunden sind, wobei der eine Steg mindest eine Rastvertiefung (74,78) und der andere Steg mindestens einen Rastvorsprung (72,78) aufweist.

8. Verkleidungselement nach Anspruch 6 oder 7, **dadurch gekennzeichnet, dass** die Stege der Vorverriegelungsvorrichtung an ihren dem jeweils anderen Verkleidungsteil (22,24) zugewandten Enden flexibel und in Richtung der Breitenerstreckung der Verkleidungsteile (22,24) biegbar sind.

9. Verkleidungselement nach einem der Ansprüche 6 bis 8, **dadurch gekennzeichnet, dass** der Steg des einen Vorverriegelungselements (66) einen Umgreifabschnitt (80) zum Umgreifen des Steges des anderen Vorverriegelungselements (68) aufweist.

10. Verkleidungselement nach Anspruch 9, **dadurch gekennzeichnet, dass** der mindestens eine Rastvorsprung (72,78) und die mindestens eine Rastvertiefung (74,78) an den einander zugewandten Seitenflächen des Umgreifabschnitts (80) des einen Steges und des anderen Steges der Vorverriegelungselemente (66,68) ausgebildet sind.

11. Verkleidungselement nach Anspruch 10, ferner **gekennzeichnet durch** Anschlagflächen (84,86) zur Begrenzung einer maximalen Auszugbewegung beider Verkleidungsteile (22,24) in Richtung von deren Längserstreckungen und/oder zur Begrenzung einer maximalen Schwenkbewegung der Verkleidungsteile.

12. Verkleidungselement nach Anspruch 11, **dadurch gekennzeichnet, dass** die Anschlagflächen (84,86) an den Stegen der Vorverriegelungselemente (66,68) und/oder der Verbindungselemente (52,54) angeordnet sind.

13. Verkleidungselement nach Anspruch 9 und 12, **dadurch gekennzeichnet, dass** eine Anschlagfläche (84,86) an einem Vorsprung (82) eines von einem Umgreifabschnitt umgriffenen Steges der Vorverriegelungsvorrichtung ausgebildet ist, wobei der Vorsprung (82) in der maximalen Auszugbewegungsposition und/oder in der maximalen Schwenkbewegungsposition an dem Umgreifabschnitt (80) anliegt.

14. Verkleidungselement nach einem der Ansprüche 1 bis 13, **dadurch gekennzeichnet, dass** das zweite Verkleidungsteil (24) an zwei in Breitenerstreckung gegenüberliegenden Enden jeweils mindestens einen Umgreifvorsprung (42) zum Umgreifen der korrespondierenden Enden des ersten Verkleidungsteils (22) und zum Führen des zweiten Verkleidungsteils (24) an dem ersten Verkleidungsteil (22) aufweist.

15. Verkleidungselement nach einem der Ansprüche 1 bis 14, **dadurch gekennzeichnet, dass** die Verkleidungswände (26,28) beider Verkleidungsteile (22,24) mit Ausnahme zumindest innerhalb ihres einander überlappenden Bereichs (36) von aufragenden Rändern begrenzt sind.

16. Verkleidungselement nach einem der Ansprüche 1 bis 15, **dadurch gekennzeichnet, dass** zumindest eines der beiden Verkleidungsteile (22,24) wenigstens ein Befestigungselement (16) zum Befestigen an dem Fahrzeug aufweist.

## Claims

1. A covering element for the interior of a vehicle, particularly an aircraft, comprising
- at least a first and a second covering portion (22,24) each of which comprises a covering wall (26,28) with a front side (46) pointing to the interior of the vehicle in the installed state and a rear side (44) as well as a width extension and a longitudinal extension directed transversely thereto,
- the covering walls (26,28) of the two covering portions (22,24) overlapping each other, and
- the second covering portion (24) being supported so as to be displaced substantially in the direction of its longitudinal extension and/or to be pivoted about a pivot axis extending substantially vertically to its longitudinal and its width extension, respectively, on the first covering portion (22),
- at least one connection element (52,54) being arranged at each covering portion (22,24), the at least two connection elements (52,54) also moving relative to each other upon a relative movement of the two covering portions (22,24), and the at least two connection elements (52,54) being adapted to be fixed by means of a fixing element (56) to prevent an unintentional relative movement of the two covering portions (22,24), and
- each connection element (52,54) being configured as a web projecting from the rear side (44) of the covering wall (26,28) of the respective covering portion (22,24) and extending in longitudinal extension of the covering portion (22,24), the webs of respectively two connection elements (52,54) of the two covering portions (22,24) being in mutual contact, and the fixing element (56) force-fittingly connecting the two webs with each other.

2. The covering element according to claim 1, **characterized in that** the fixing element (56) is a clamp (58) adapted to be put upon the two webs in contact and comprising clawing elements (60) for clawing into the webs.

3. The covering element according to claim 1 or 2, **characterized in that** the webs of the two covering portions (22,24), at their ends facing the respective other covering portion (22,24), are flexible and bendable in the direction of the width extension of the covering portions (22,24).

4. The covering element according to one of claims 1 to 3, further **characterized by** a pre-locking device for pre-locking the covering portions (22,24) in their respective position of relative movement.

5. The covering element according to claim 4, **characterized in that** the pre-locking device comprises at least two pre-locking elements (66,68) arranged at two different covering portions, said pre-locking elements being in mutual contact and adapted to be connected with each other against unintentional relative movements.

6. The covering element according to claim 4, **characterized in that** each pre-locking element (66,68) is configured as a web projecting from the rear side (44) of the covering wall (26,28) of the respective covering portion (22,24) and extending in longitudinal extension of the covering portion (22,24), and that the two webs are in mutual contact.

7. The covering element according to claim 6, **characterized in that** the webs of each pair of pre-locking elements (66,68) are lockingly connected with each other, the one web comprising at least one locking recess (74,78) and the other web comprising at least one locking projection (72,78).

8. The covering element according to claim 6 or 7, **characterized in that** the webs of the pre-locking device, at their ends facing the respectively other covering portion (22,24), are flexible and bendable in the direction of the width extension of the covering portions (22,24).

9. The covering element according to one of claims 6 to 8, **characterized in that** the web of the one pre-locking element (66) comprises an encompassing section (80) for encompassing the web of the other pre-locking element (68).

10. The covering element according to claim 9, **characterized in that** the at least one locking projection (72,78) and the at least one locking recess (74,78) are formed at the side faces of the encompassing section (80) of the one web and of the other web of the pre-locking elements (66,68), which face each other.

11. The covering element according to claim 10, further **characterized by** stop faces (84,86) for restricting a maximum withdrawal movement of the two covering portions (22,24) in the direction of the longitudinal extensions thereof and/or for restricting a maximum pivotal movement of the covering portions.

12. The covering element according to claim 11, **characterized in that** the stop faces (84,86) are arranged at the webs of the pre-locking elements (66,68) and/or connection elements (52,54).

13. The covering element according to claim 9 and 12, **characterized in that** one stop face (84,86) is formed at a projection (82) of a web of the pre-locking device encompassed by an encompassing section, the projection (82) contacting the encompassing section (80) in the position of maximum withdrawal movement and/or in the position of maximum pivotal movement.

14. The covering element according to one of claims 1 to 13, **characterized in that** the second covering portion (24) comprises at least one encompassing projection (42) at each of two ends opposedto each other in width extension, for encompassing the corresponding ends of the first covering portion (22) and for guiding the second covering portion (24) at the first covering portion (22).

15. The covering element according to one of claims 1 to 14, **characterized in that** the covering walls (26,28) of both covering portions (22,24) are defined by rising borders, with the exception of at least within their region (36) of mutual overlapping.

16. The covering element according to one of claims 1 to 15, **characterized in that** at least one of the two covering portions (22,24) comprises at least one fastening element (16) for being fastened to the vehicle.

## Revendications

1. Élément de parement pour l'habitacle d'un véhicule, en particulier un avion, comportant
- au moins une première et une deuxième partie de parement (22, 24), dont chacune comporte une paroi (26, 28) avec une face avant (46), orientée vers l'habitacle du véhicule en position montée, et une face arrière (44), ainsi qu'avec un sens en largeur et un sens en longueur, orienté transversalement à ce dernier,
- dans lequel les parois (26, 28) des deux parties de parement (22, 24) sont agencées en chevauchement,
- dans lequel la deuxième partie de parement (24) est montée contre la première partie de parement (22) de manière à pouvoir se déplacer sensiblement dans la direction de son sens en longueur et/ou à pouvoir pivoter autour d'un axe de pivotement sensiblement perpendiculaire à son sens en longueur et à son sens en largeur,
- dans lequel au moins un élément d'assemblage (52, 54) est agencé au niveau de chaque partie de parement (22, 24), lesdits au moins deux éléments d'assemblage (52, 54) se déplaçant également l'un par rapport à l'autre dans le cas d'un mouvement relatif des deux parties de parement (22, 24) et lesdits au moins deux éléments d'assemblage (52, 54) pouvant être bloqués au moyen d'un élément de blocage (56) pour empêcher un mouvement relatif involontaire entre les deux parties de parement (22, 24) lorsque celles-ci se mettent en position relative souhaitée, et
- dans lequel chaque élément d'assemblage (52, 54) est conçu sous forme de languette en saillie sur la face arrière (44) de la paroi (26, 28) de la partie de parement (22, 24) concernée et orientée dans le sens en longueur de la partie de parement (22, 24), les languettes de respectivement deux éléments d'assemblage (52, 54) des deux parties de parement (22, 24) étant en appui l'une contre l'autre et l'élément de blocage (56) reliant les deux languettes par conjugaison de force.

2. Élément de parement selon la revendication 1, **caractérisé en ce que** l'élément de blocage (56) est une pince (58), qui peut être enfichée sur les deux languettes en appui l'une contre l'autre et qui comporte des éléments à griffes (60) pour entrer en prise avec les languettes.

3. Élément de parement selon la revendication 1 ou 2, **caractérisé en ce que** les languettes des deux parties de parement (22, 24) sont flexibles au niveau de leurs extrémités orientées respectivement vers l'autre partie de parement (22, 24) et sont pliables dans la direction du sens en largeur des parties de parement (22, 24).

4. Élément de parement selon l'une quelconque des revendications 1 à 3, **caractérisé en outre par** un dispositif de pré-blocage destiné à bloquer les parties de parement (22, 24) dans leur position relative respective.

5. Élément de parement selon la revendication 4, **caractérisé en ce que** le dispositif de pré-blocage comporte au moins deux éléments de pré-blocage (66, 68), qui sont agencés au niveau de différentes parties de parement et qui sont en appui l'un contre l'autre et peuvent être assemblés l'un à l'autre pour empêcher des mouvements relatifs involontaires.

6. Élément de parement selon la revendication 4, **caractérisé en ce que** chaque élément de pré-blocage (66, 68) est conçu sous forme de languette en saillie sur la face arrière (44) de la paroi (26, 28) de la partie de parement (22, 24) concernée et orientée dans le sens en longueur de la partie de parement (22, 24) , et **en ce que** les deux languettes sont en appui l'une contre l'autre.

7. Élément de parement selon la revendication 6, **caractérisé en ce que** les languettes de chaque paire d'éléments de pré-blocage (66, 68) en appui l'une contre l'autre sont assemblées par encliquetage l'une avec l'autre, l'une des languettes comportant au moins un creux d'encliquetage (74, 78) et l'autre languette au moins une saillie d'encliquetage (72, 78).

8. Élément de parement selon la revendication 6 ou 7, **caractérisé en ce que** les languettes du dispositif de pré-blocage sont flexibles au niveau de leurs extrémités orientées respectivement vers l'autre partie de parement (22, 24) et sont pliables dans la direction du sens en largeur des parties de parement (22, 24).

9. Élément de parement selon l'une quelconque des revendications 6 à 8, **caractérisé en ce que** la languette de l'un des éléments de pré-blocage (66) comporte un tronçon de serrage (80) destiné à enserrer la languette de l'autre élément de pré-blocage (68).

10. Élément de parement selon la revendication 9, **caractérisé en ce que** ladite au moins une saillie d'encliquetage (72, 78) et ledit au moins un creux d'encliquetage (74, 78) sont réalisés au niveau des faces latérales face à face du tronçon de serrage (80) de l'une des languettes et de l'autre languette des éléments de pré-blocage (66, 68).

11. Élément de parement selon la revendication 10, **caractérisé en outre par** des surfaces de butée (84, 86) destinées à délimiter un mouvement d'extraction maximal des deux parties de parement (22, 24) dans la direction de leur sens en longueur et/ou destinées à délimiter un mouvement de pivotement maximal des parties de parement.

12. Élément de parement selon la revendication 11, **caractérisé en ce que** les surfaces de butée (84, 86) sont agencées au niveau des languettes des éléments de pré-blocage (66, 68) et/ou des éléments d'assemblage (52, 54) .

13. Élément de parement selon les revendications 9 et 12, **caractérisé en ce qu'**une surface de butée (84, 86) est réalisée sur une saillie (82) d'une languette du dispositif de pré-blocage, enserrée par un tronçon de serrage, la saillie (82) étant en appui contre le tronçon de serrage (80), dans la position d'extraction maximale et/ou dans la position de pivotement maximale.

14. Élément de parement selon l'une quelconque des revendications 1 à 13, **caractérisé en ce que** la deuxième partie de parement (24), au niveau de deux extrémités face à face dans le sens en largeur, comporte respectivement au moins une saillie de serrage (42) destinée à enserrer les extrémités correspondantes de la première partie de parement (22) et destinée à guider la deuxième partie de parement (24) contre la première partie de parement (22).

15. Élément de parement selon l'une quelconque des revendications 1 à 14, **caractérisé en ce que** les parois (26, 28) des deux parties de parement (22, 24) sont délimitées par des bords en relief, sauf au moins à l'intérieur de leur zone (36) de chevauchement.

16. Élément de parement selon l'une quelconque des revendications 1 à 15, **caractérisé en ce qu'**au moins l'une des deux parties de parement (22, 24) comporte au moins un élément de fixation (16) pour la fixation contre le véhicule.
